Europäisches Patentamt

European Patent Office

Office européen des brevets

(19)

(11) **EP 0 433 863 B1**

(12) **EUROPEAN PATENT SPECIFICATION**

(45) Date of publication and mention
of the grant of the patent:
**09.10.1996 Bulletin 1996/41**

(51) Int Cl.$^6$: **H04L 27/36**

(21) Application number: **90123948.3**

(22) Date of filing: **12.12.1990**

(54) **System and method for setting up a transmittter in high capacity digital radio links**

Sendereinstellungssystem und -verfahren bei Funkverbindungen mit hoher Kapazität

Système et méthode de réglage d'émetteur dans des liaisons radio à grandes capacité

(84) Designated Contracting States:
**BE CH DE DK ES FR GB GR LI NL SE**

(30) Priority: **21.12.1989 IT 2277189**

(43) Date of publication of application:
**26.06.1991 Bulletin 1991/26**

(73) Proprietor: **ALCATEL ITALIA Società per Azioni
I-20149 Milano (IT)**

(72) Inventors:
• **Cardini, Lorenzo
I-20052 Monza (MI) (IT)**

• **Perego Giancarlo
I-20052 Monza (MI) (IT)**
• **Nobili, Rocco
I-20060 Cassina De Pecchi (MI) (IT)**

(74) Representative:
**Strehl Schübel-Hopf Groening & Partner
Maximilianstrasse 54
80538 München (DE)**

(56) References cited:
**EP-A- 0 131 725       EP-A- 0 289 130
EP-A- 0 330 774       EP-A- 0 360 178**

**Description**

The present invention relates to a system for the set-up of transmitters in high-capacity digital radio links in which multi-level QAM (Quadrature Amplitude Modulation) digital signals are superimposed on a carrier wave. The set-up is carried out by a plurality of sinusoidal signals (tones) generated externally of the transmitter, for compensating the odd-order intermodulation products developed under the effect of a non-linearity of the transmitter power amplifier.

A method and a device with the features included in the first part of claim 1 and, respectively, that of claim 2 are known from EP-A-0 289 130.

The following description of the prior art and of an embodiment of the invention makes reference to the accompanying drawings, in which

Fig. 1     shows the principal scheme of a transmitter;

Fig. 2     illustrates a measuring arrangement for setting up such transmitter in accordance with a widely used prior-art procedure;

Fig. 3     represents the constellation of symbols transmitted in a 16-QAM-modulation system, with the arc A-B showing a possible trajectory covered by a signal in a transition from A to B;

Fig. 4     shows the behaviour of output power versus input power in a power amplifier;

Fig. 5     is a block diagram of a test signal generator GSPT(6) according to an embodiment of the invention;

Fig. 6     shows the behaviour of the modulating OQM wave (-a-) and of the corresponding signal power SPT (-b-) versus time; and

Fig. 7     illustrates a measuring arrangement for setting up a transmitter in accordance with an embodiment of the invention.

Statement of the prior Art

Transmitter linearity is an important quality parameter in high capacity digital radio links that apply multilevel quadrature amplitude modulation, particularly in case of a high number of modulation levels (e.g. 64 or 256 QAM).

The final power amplifiers used in transmitters are intrinsically subject to distortion caused by nonlinearity both even order and odd order. These last nonlinearities are particularly dangerous as they cause intermodulation products that fall inside the transmitted digital signal band and therefore they cannot be eliminated by simple filter action.

To compensate the effect of these amplifier nonlinearities of odd order and in particular of the third order, IF (intermediate frequency) predistortion technique is often used. It generates an amplitude and phase distortion complementary to the distortion caused by the power amplifier, which is thus compensated and annulled. The alignment acts on the amplitude and phase adjustments in the predistortion circuit.

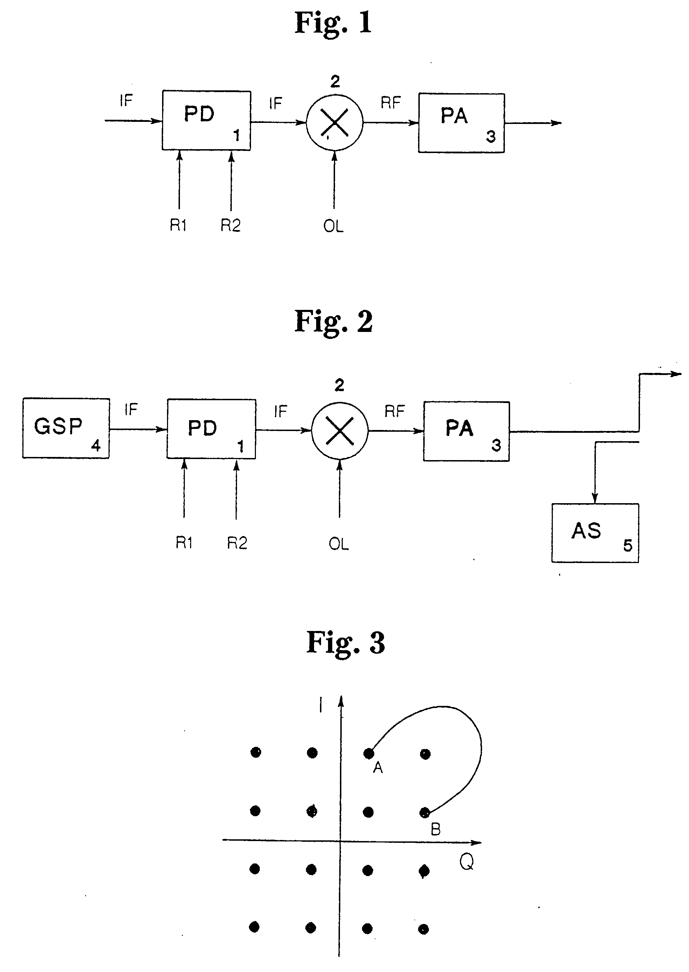

Figure 1 shows a principle scheme of a transmitter: by PD (1) it is indicated an IF linearizer formed by a predistorter for distortion compensation; $R_1$ and $R_2$ indicate the amplitude and phase adjustments of the distortion caused by the predistorter; OL is a carrier wave generated by a local oscillator that is applied to a converter X(2) to convert the IF signal of the predistorter to the transmission frequency RF; and PA(3) is the final power amplifier. The criterion by which the above indicated compensation is optimized represents a very critical feature. This has not yet been considered by recommendations generally recognized and accepted in the world.

Among the most common criteria used there is the minimization of intermodulation products measured at the output of the power amplifier. Figure 2 shows a related measure bench, in which it is shown the generator GSP (4) of the test signal SP that is sent into PD (1) of the transmitter chain formed, as seen in Figure 1, by PD(1), X(2) and PA (3); and a spectrum analyzer AS(5), on which the behaviour of the output signal formed by the amplified test signal SP with the addition of intermodulation distortion is displayed.

Using this procedure, the biggest problem to solve is the selection of the test signal SP to use for optimizing the system performances. This signal must have characteristics similar to the characteristics of the digital signal. In particular it must have analogous bandwidths, mean power and amplitude dynamics.

This last parameter is very important, but until now it has not been considered with sufficient attention. In fact a QAM signal exhibits a ratio Pp/Pm (Pp = peak power; Pm = mean power) that depends on:

- number of modulation levels,
- filtering type, and
- roll-off factor

Owing to over-elongations that occur in transitions from one status to another status of the constellation that represents the geometrical locus of transmitted symbols (see Figure 3), the obtained instantaneous values of power may be considerably greater than the mean power value.

For example for:

- modulation 64 QAM
- $\sqrt{\text{raised cosine}}$ filtering
- roll-off factor = 0.35

results in :

$$(Pp/Pm)dB \cong 8 \text{ dB}$$

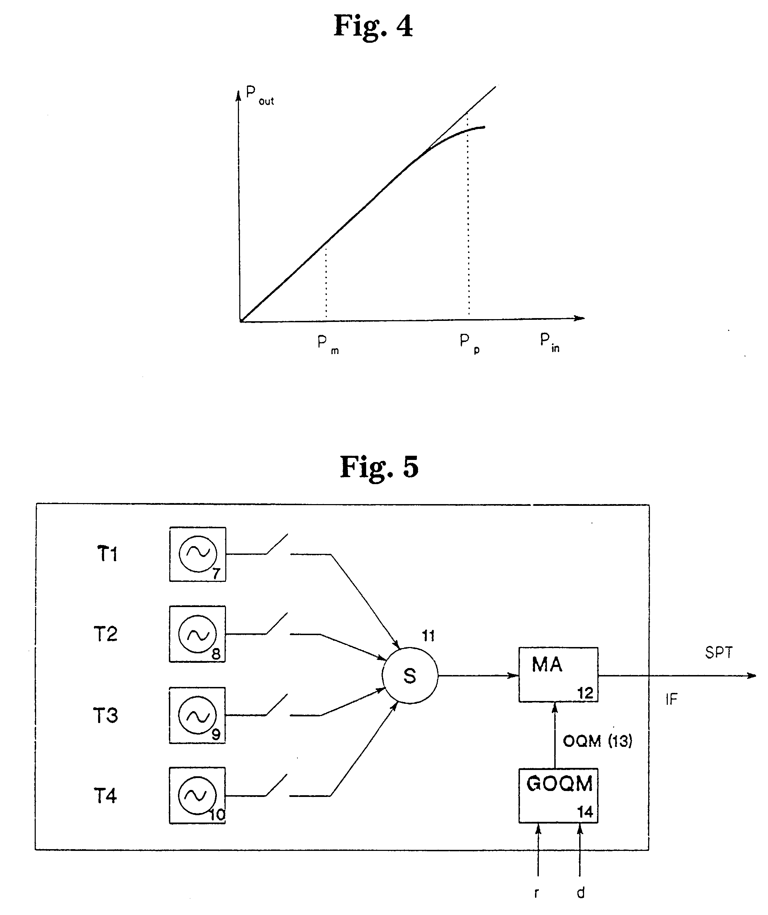

Making a quality test of the relation that typically exists between input power and output power in a power amplifier (see Figure 4) it occurs that the distortion in proximity to the peak value Pp differs in a relevant manner from the distortion corresponding to lower power values. That is to say, the spectrum of the output signal and in particular the amplitude of intermodulation products depend on the amplitude dynamics of the signal. Therefore the test signal SP must cover the characteristic of the power amplifier PA(3) with an instantaneous power distributed in the same manner as the digital signal.

In particular it must have the same ratio Pp/Pm.

Until to-day, the following test signals have been used :

1) DIGITAL SIGNAL

This is just the signal that must be transmitted. Looking at the spectrum analyzer AS(5), it has lateral lobes also due to intermodulation of amplifier PA(3). Therefore the compensation of such intermodulation is made by minimizing the power associated with these lobes. Therefore,

- the amplifier PA(3) is charged in the actual operating condition;
- it is difficult to find the desired minimum condition (just looking at the spectrum analyzer display);
- the performance is generally unsatisfactory.

2) MULTITONE SIGNALS with mean power equal to the mean power of digital signals.

They are obtained by summing N sinusoidal signals at different frequencies and it occurs that:

- Pp/Pm increases with the number N of tones;
- the distribution of the amplitudes is uncontrollable (the time percentage during which the instantaneous amplitude approximates the peak value Pp decreases when N increases);
- the performance for modulations with a number of levels is unsatisfactory.

2a) 2 TONES with mean power equal to the mean power of digital signals.

They are obtained by summing two sinusoidal signals (tones) at different frequencies and it occurs that:

- Pp/Pm = 3 dB;
- performances are foul for modulations at high level numbers.

2b) 4 TONES with mean power equal to the mean power of digital signals. They are obtained by summing four sinusoidal signals at different frequencies, and the following characteristics occur:

- Pp/Pm = 6 dB;
- performances are optimal for 16 QAM modulations;
- performances for modulations with greater number of levels are unsatisfactory.

2c) 4 TONES with mean power that differs from the mean power of digital signals by [(Pp/Pm)dB-6]dB, where Pp is the peak power and Pm is the mean power of a digital signal.

For this signal, obtained summing four tones at different frequencies, it occurs that:

- it provides good performance for modulations with high level numbers;
- it has high fulfilment complexity (all considered transmission systems operate under automatic level control that keeps the mean power of the transmitted signal constant versus time. The use of such test signal requires the transmitter to be put under manual control, to be adjusted to minimize intermodulation products and then again put under automatic control. Therefore this procedure is complex and not suitable in practice.

Main characteristics of the amplitude-modulated multitone signal according to the invention.

The invention provides a method according to claim 1 and a device according to claim 2 for solving these problems. Figure 5 shows the block scheme of a generator GSPT(6) for the test signal SPT of the invention.

It includes four sinusoidal oscillators $T_1(7)$, $T_2(8)$, $T_3(9)$, $T_4(10)$ at different frequencies (but included in the field of IF) and that can be cut off individually by means of switches.

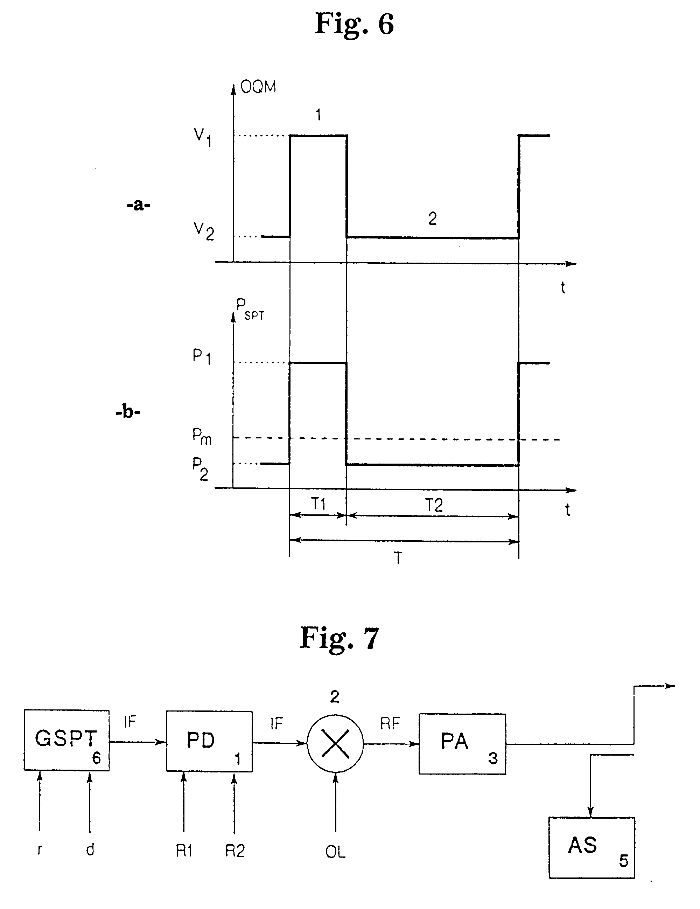

The generated tones are combined in a summator S(11) and amplitude-modulated in MA(12) by a square wave (with adjustable "duty cycle" and levels) OQM(13) as shown in Figure 6-a and generated by a square wave generator GOQM(14). Owing to the amplitude modulation, the output power of the signal SPT versus time behaves as shown in Figure 6-b, where Pm represents the transmitted mean power and P1 and P2 indicate the mean power associated to the states 1 and 2 having durations T1 and T2, respectively, $T=T_1+T_2$ being the period of square wave OQM(13).

The selection of T is made so that the frequency of the square wave 1/T is greatly below the signal frequency $f_{IF}$ and, at the same time, sufficiently high so that the automatic level control circuits present in the transmitter do not sense the sudden power change among the states 1 and 2, but only the mean power value Pm.

Acting on the levels $V_1$ and $V_2$ of OQM(13) it is possible to adjust:

$$r = P2/P1$$

while acting onto the "duty cycle" of OQM(13) it is possible to adjust:

$$d= T1/T$$

Therefore considering these parameters it can be written:

$$P \text{ mean transmitted} = (p1T1 + P2T2)/T =$$

$$= [d+r(1-d)]P1 = (l/k).P1$$

$$K = 1/[d+r(1-d)]$$

Remembering that for a signal formed by the sum of N sinusoidal uncorrelated tones, it is:

$$\left( \frac{\text{Ppeak}}{\text{P mean}} \right)_{dB} = 10 \text{Log} N = (N) dB$$

then it can be assumed that the instantaneous signal peak power with N modulated tones is equal to the mean power associated to state 1 summed with the power increase associated with the (instantaneous) combination in phase of the N tones as numerically specified above:

$$(Ppeak)dBm = (P1)dBm + (N)dB$$

Finally it can be obtained that:

$$\left( \dfrac{Ppeak)}{\text{P mean transmitted}} \right)_{dB} = (N)dB + (K)dB$$

It can be concluded that using the shown system and keeping constant the transmitted mean power, it is possible to control the dynamics of instantaneous amplitudes by simply selecting:

N, r and d

Owing to the structure of the generator GSPT(6), N can be selected equal to 1, 2, 3 or 4. In the case in which N=4 (for modulations at high level number, e.g. 64, 256 QAM) it occurs:

$$\left( \dfrac{Ppeak}{\text{P mean transmitted}} \right)_{dBm} = 6 \ dB + (K)dB$$

The above set-up system can be schematized as shown in Figure 7. SPT is the test signal illustrated above and GSPT (6) is the corresponding generator. Knowing the characteristics of transmitted digital signals (level number, filtration type, roll-off factor and Pp/Pm) the values of r and d can be established so that the test signal SPT simulates the digital signal very closely, in particular so that it has the same ratio Pp/Pm.

This signal SPT is passed into the transmitter and then the transmitter is optimized by acting on the adjustments R1 and R2 of the predistorter to minimize the power of intermodulation products at the output of PA(3). This condition is shown on the spectrum analyzer AS(5) by a minimum amplitude of the corresponding spectral components.

Summarising the main characteristics and advantages of the invention, it can be said that:

- the test signal SPT simulates the instantaneous behaviour of the digital signal in a real manner because it can be adapted to the characteristics of the last one of them;
- the test signal SPT is generated in a very simple manner;
- the test signal SPT has a mean power equal to the power of the digital signal; as the automatic level control systems distributed along the transmitter are transparent to the fast power changes (with reference to P1 and P2 of the Figure 6-b), the alignment of the transmitter can be made in automatic level control mode;
- owing to the reason specified in the preceding point, the set-up is very simple and fast: changes on the transmitter are unnecessay, in contrast to the case where a multitone signal at mean power greater than the power of the digital signal is used;
- it is very simple to find the desired optimal condition from the spectrum reading;
- the measure bench for the set-up requires, externally of the transmitter, the use of just the generator GSPT and of a spectrum analyzer;
- the system performance for this type of alignment is very good, particularly for a high number of modulation levels.

## Claims

1. A method for setting up a transmitter in a high-capacity digital radio link in which multi-level QAM digital signals are superimposed on a carrier wave (OL), wherein

   a test signal (SPT) is formed by sinusoidal tones generated externally of the transmitter (PD$_{(1)}$, X$_{(2)}$, PA$_{(3)}$) for compensating odd-order intermodulation products caused by a non-linearity of a transmitter power amplifier (PA$_{(3)}$),
   the test signal (SPT) is sent through the transmitter,
   the intermodulation products are measured at the output of the transmitter, and

the parameters of a transmitter predistorter ($PD_{(1)}$) are adjusted for minimising the power of the intermodulation products measured,

**characterised** in that the test signal (SPT) is formed by summing a number (N) of sinusoidal tones which are amplitude modulated by a square wave ($OQM_{(13)}$), the duty cycle (d) and level (r) of which are adjusted so that the test signal (SPT) has the same peak power/mean power ratio ($P_{peak}/P_{mean}$) as the digital signals.

2. The method of claim 1, wherein said number (N) is 4.

3. A device for carrying out the method of claim 1, including a test signal generator ($GSPT_{(6)}$), a predistorter ($PD_{(1)}$), a converter ($X_{(2)}$), a power amplifier ($PA_{(3)}$) and a spectrum analyser ($AS_{(5)}$) interconnected in series in this order,

**characterised** in that the signal generator ($GSPT_{(6)}$) includes a number (N) of sinusoidal oscillators ($T1_{(7)}$... $T4_{(10)}$), a summing circuit ($S_{(11)}$) for summing the outputs of the oscillators, an amplitude modulator ($MA_{(12)}$) connected to the summing circuit, and a square-wave generator ($GOQM_{(14)}$) connected to the amplitude modulator and being adjustable as to amplitude and duration.

4. The device of claim 3, wherein said number (N) is 4.

## Patentansprüche

1. Verfahren zum Einstellen eines Senders in einer digitalen Hochleistungs-Funkverbindung, bei der digitale QAM-Vielpegelsignale einer Trägerwelle (OL) überlagert werden, wobei

aus außerhalb des Senders ($PD_{(1)}$, $X_{(2)}$, $PA_{(3)}$) erzeugten Sinuswellen ein Testsignal (SPT) gebildet wird, um durch eine Nicht-Linearität eines Sender-Leistungsverstärkers ($PA_{(3)}$) bewirkte Intermodulationsprodukte ungerader Ordnung zu kompensieren,
das Testsignal (SPT) über den Sender ausgesandt wird,
die Intermodulationsprodukte am Ausgang des Senders gemessen werden, und
die Parameter eines Sender-Vorverzerrers ($PD_{(1)}$) so justiert werden, daß die Leistung der gemessenen Intermodulationsprodukte minimal wird,

dadurch **gekennzeichnet,** daß das Testsignal (SPT) durch Aufsummieren einer Anzahl (N) von mit einer Rechteckwelle ($OQM_{(13)}$) amplitudenmodulierten Sinuswellen gebildet wird, wobei das Tastverhältnis (d) und der Pegel (r) der Rechteckwelle so eingestellt werden, daß das Testsignal (SPT) das gleiche Verhältnis aus Spitzenleistung zu mittlerer Leistung ($P_{peak}/P_{mean}$) hat wie die Digitalsignale.

2. Verfahren nach Anspruch 1, wobei die Anzahl (N) 4 ist.

3. Vorrichtung zur Durchführung des Verfahrens nach Anspruch 1, umfassend - in Serienschaltung mit der nachstehenden Reihenfolge - einen Testsignalgenerator ($GSPT_{(6)}$), einen Vorverzerrer ($PD_{(1)}$), einen Umsetzer ($X_{(2)}$), einen Leistungsverstärker ($PA_{(3)}$) und einen Spektralanalysator (AS(5)),

dadurch **gekennzeichnet**, daß der Signalgenerator ($GSPT_{(6)}$) eine Anzahl (N) von Sinusoszillatoren ($T1_{(7)}$... $T4_{(10)}$), eine Summierschaltung ($S_{(11)}$) zum Aufsummieren der Ausgangssignale der Oszillatoren, einen an die Summierschaltung angeschlossenen Amplitudenmodulator ($MA_{(12)}$) sowie einen an den Amplitudenmodulator angeschlossenen und bezüglich Amplitude und Dauer einstellbaren Rechteckwellengenerator ($GOQM_{(14)}$) umfaßt.

4. Vorrichtung nach Anspruch 3, wobei die Anzahl (N) 4 ist.

## Revendications

1. Procédé pour régler un émetteur dans une liaison radio numérique de grande capacité, dans lequel des signaux numériques multiniveau à MAQ sont superposés à une porteuse (OL), dans lequel

un signal d'essai (SPT) est formé par des signaux sonores sinusoïdaux générés à l'extérieur de l'émetteur (PD(1), X(2), PA(3)) pour compenser des produits d'intermodulation d'ordre impair provoqués par une non-linéarité d'un amplificateur (PA(3)) de puissance d'émetteur,

le signal d'essai (SPT) est envoyé par l'intermédiaire de l'émetteur,
les produits d'intermodulation sont mesurés à la sortie de l'émetteur, et
les paramètres d'un moyen de préaccentuation (PD(1)) d'émetteur sont réglés pour limiter la puissance des produits d'intermodulation mesurés,

**caractérisé** en ce que le signal d'essai (SPT) est formé en réalisant la somme d'un nombre (N) de signaux sonores sinusoïdaux qui sont modulés en amplitude par une onde carrée (OQM(13)) dont le rapport cyclique (d) et le niveau (r) sont réglés afin que le signal d'essai (SPT) ait le même rapport puissance maximale/puissance moyenne ($P_{peak}/P_{mean}$) que les signaux numériques.

2. Procédé selon la revendication 1, dans lequel ledit nombre (N) est de 4.

3. Dispositif pour mettre en oeuvre le procédé selon la revendication 1, comprenant un générateur (GSPT(6)) de signal d'essai, un moyen de préaccentuation (PD(1)), un convertisseur (X(2)), un amplificateur de puissance (PA(3)) et un analyseur (AS(5)) de spectre interconnectés en série dans cet ordre,
**caractérisé** en ce que le générateur (GSPT(6)) de signal comporte un nombre (N) d'oscillateurs sinusoïdaux (T1(7)...T4(10)), un circuit de sommation (S(11)) pour faire la somme des signaux de sortie des oscillateurs, un modulateur (MA(12)) d'amplitude relié au circuit de sommation, et un générateur (GOQM(14) d'ondes carrées relié au modulateur d'amplitude et réglable en amplitude et en durée.

4. Dispositif selon la revendication 3, dans lequel ledit nombre (N) est de 4.

# Fig. 1

# Fig. 2

# Fig. 3

# Fig. 4

# Fig. 5

# Fig. 6

# Fig. 7